(19) Europäisches Patentamt
European Patent Office
Office européen des brevets

(11) **EP 4 164 023 B1**

(12) **EUROPEAN PATENT SPECIFICATION**

(45) Date of publication and mention
of the grant of the patent:
**11.03.2026 Bulletin 2026/11**

(51) International Patent Classification (IPC):
*H01M 4/131* (2010.01)     *H01M 4/133* (2010.01)
*H01M 4/134* (2010.01)

(21) Application number: **22808567.6**

(22) Date of filing: **10.01.2022**

(52) Cooperative Patent Classification (CPC):
**H01M 4/0447; H01M 4/0445; H01M 4/131;
H01M 4/133; H01M 4/134; H01M 4/1391;
H01M 4/1393; H01M 4/1395; H01M 4/386;
H01M 4/387; H01M 4/485; H01M 4/587;
H01M 10/049; H01M 10/0525; H01M 10/446;**
(Cont.)

(86) International application number:
**PCT/CN2022/070955**

(87) International publication number:
**WO 2023/024404 (02.03.2023 Gazette 2023/09)**

(54) **LITHIUM-ION BATTERY PRE-LITHIATION METHOD AND LITHIUM-ION BATTERY**

VERFAHREN ZUR VORLITHIIERUNG EINER LITHIUM-IONEN-BATTERIE UND
LITHIUM-IONEN-BATTERIE

PROCÉDÉ DE PRÉ-LITHIATION DE BATTERIE AU LITHIUM-ION ET BATTERIE AU LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.08.2021  CN 202110998587**

(43) Date of publication of application:
**12.04.2023 Bulletin 2023/15**

(73) Proprietor: **Hefei Gotion High-Tech Power Energy
Co., Ltd.
Hefei City, Anhui 230012 (CN)**

(72) Inventors:
• **XU, Xingwu
Hefei
Anhui 230012 (CN)**
• **LIN, Shaoxiong
Hefei
Anhui 230012 (CN)**
• **LIU, Chaohui
Hefei
Anhui 230012 (CN)**

(74) Representative: **Berggren Oy
P.O. Box 16
Fabianinkatu 21
00101 Helsinki (FI)**

(56) References cited:
WO-A1-2020/111746     CN-A- 107 768 743
CN-A- 111 081 982     CN-A- 113 113 679
CN-U- 214 099 829     JP-A- 2012 009 626
US-A1- 2020 067 085     US-A1- 2021 159 491
US-A1- 2021 218 016

(52) Cooperative Patent Classification (CPC): (Cont.)
**H01M 50/528; H01M 50/536;** H01M 2004/027;
Y02E 60/10; Y02P 70/50

**Description**

**Technical Field**

The present disclosure relates to a lithium ion battery pre-lithiation method and a lithium ion battery, and belongs to the technical field of lithium ion battery production.

**Background Art**

At present, automobile electrification already becomes an irreversible trend all over the world. Therefore, the requirements for the core component of an electric vehicle - lithium ion battery are higher and higher. The focus is on the continuously improved energy density and cycle life. For example, the weight energy density of a ternary semi-solid battery is required to be more than 350~400 Wh/Kg, the weight energy density of a lithium iron phosphate single battery is required to be more than 230 Wh/Kg, and the cycle life is required to be more than 15000 times. At this time, it is necessary to use a silicon-containing negative electrode material, and a real industrial application of a pre-lithiation technology also becomes more and more urgent. At the same time, portable electronic products (such as a mobile phone) also have the same demand for high capacity (such as the longer standby time) and long life.

A silicon negative electrode usually refers to metal silicon (Si) or silicon oxide (SiO). Si may form a $Li_{15}Si_4$ alloy with Li at a normal temperature, and the theoretical gram capacity is 3579 mAh/g, and is 10 times of that of a graphite negative electrode. However, in the process of forming the alloy, the volume expansion rate of silicon is about 300-400%, this causes the expansion of the negative electrode and a whole battery cell. At the same time, the excessive expansion causes the fragmentation of a silicon-containing granular material, and a large number of new surfaces are regenerated, thereby a large amount of lithium ions are consumed. Generally speaking, about 6% of the lithium ions are irreversibly consumed by the graphite negative electrode due to the formation of a solid electrolyte interphase (SEI), while about 10-20% are consumed by the silicon-containing negative electrode. This is the main reason for the low initial Coulombic efficiency of the silicon-containing negative electrode.

In order to solve this problem, a lot of researches are performed on the pre-lithiation technology (or the lithium compensation technology) in the academic circles and industrial circles, and this technology is summarized in a document "Lithium Ion Battery Lithium Compensation Technology" ("Energy Storage Science and Technology", May 2021, Volume 10, Issue 3). In summary, the main pre-lithiation technologies at present are divided into pre-lithiation with metal lithium powder, pre-lithiation of metal lithium foil rolling, pre-lithiation of metal lithium evaporation, pre-lithiation with positive electrode additive, electrochemical pre-lithiation and so on.

A patent (publication number: CN1290209C) by FMC corporation applied in China provided a method for pre-lithiation with lithium metal powder. However, this method has the very high requirements for a process, and the costs of raw materials and processes are also very high, so far it is not yet applied in industrialization.

A Chinese patent application with publication numbers of CN112310336A and CN112397682A disclosed a device and method for pre-lithiation of metal lithium foil rolling. This device is very complex, the requirements for process control are very high, the requirements for environmental control are harsh and there are larger potential safety hazards. At the same time, because this method uses a lubricant, a release agent and a bearing material and so on with the special requirements, the manufacturing cost is very high.

A Chinese patent application with the publication number of CN111430659A disclosed a pre-lithiation of vacuum evaporation. This method has the advantage that the metal lithium evaporation layer is thin and uniform, but the prominent disadvantage is that a vacuum evaporation device is expensive, and it is very difficult to be applied in industrialization.

In terms of positive electrode lithium compensation additives, there are mainly $Li_2O$, $Li_2S$, $Li_3N$, $Li_4FeO_5$, $Li_6CoO_4$, $Li_2NiO_2$, $Li_4DHBN$ and so on. However, a residual substance after the pre-lithiation in this method affects the energy density and performance of the battery, and there are also many side effects (such as gas generation), so far there is not yet an additive that may meet the requirements of the industrial application.

An authorized patent with the publication number of CN105845894B provided an electrochemical wet-process pre-lithiation method. In the implementation process of this method, it is found that the method of single-piece pre-lithiation of a negative electrode and assembly of a battery is still complex, which needs to be further improved. A patent application with the publication number of CN110224182A disclosed an improvement scheme of the electrochemical "wet-process pre-lithiation", but this method is still not the simplest process, because it has a step of taking out the bare battery cell after the pre-lithiation is completed. A patent application with the publication number of CN110061299A disclosed a method of electrochemical pre-lithiation. This method requires opening a round hole on a cover plate of a battery cell, putting a metal electrode and metal lithium into the battery cell for the electrochemical pre-lithiation, and then taking out. Since it is difficult to seal the opened hole after liquid injection and there is a risk of liquid leakage, this method is very difficult to be industrialized. At the same time, this method also has a risk of metal lithium dissolution and partial lithium precipitation from an electrode piece. A patent application with the publication number of CN111969266A disclosed an automatic pre-lithiation method of a cylindrical lithium ion battery, and only limited to the cylindrical battery. The metal lithium is put into a central hole of the cylindrical battery and contacted with a negative electrode housing, to complete the automatic pre-lithiation. This method may lead to the partial lithium precipitation in the battery cell because the lithium metal is concentrated and placed locally, and its industrialization still has great limitations. At the same time, the biggest problem of the electrochemical pre-lithiation method is that it requires very long pre-lithiation time, the amount of the pre-lithiation is small, and it is easy to precipitate lithium metal particles.

In conclusion, existing various pre-lithiation methods still have some or other disadvantages and do not achieve the real industrialization yet. Therefore, it is very necessary to find a simple, easy, low-cost pre-lithiation method for industrial application.

## <u>Summary</u>

In order to solve the technical problems such as long electrochemical pre-lithiation time, low pre-lithiation amount, uneven pre-lithiation, and dissolution of metal lithium particles, the present disclosure is to provide a pre-lithiation method of lithium ion battery. By setting a lithium source composite piece connected with the negative electrode inside the battery cell, the pre-lithiation process of the negative electrode may be achieved, so that the battery gain a higher energy density and a longer life.

In order to achieve the above purpose, the present disclosure provides a pre-lithiation method of a lithium ion battery, and this method is a low-cost electrochemical pre-lithiation method easy to be industrialized, including:

in the conventional lithium ion battery manufacturing process, before injecting the electrolyte, arranging more than one lithium source composite piece in a core body (such as a coiled core or a laminated core, the same below), and connecting at least one of the lithium source composite pieces with the negative electrode lug of the lithium ion battery; and

injecting the electrolyte, so that the lithium source composite piece is immersed in the electrolyte, and pre-lithiating the negative electrode.

According to the specific implementation scheme of the present disclosure, preferably, the lithium source composite piece is a metal composite lithium piece formed by compounding a lithium foil and a metal foil (for example, a composite structure of one layer of the lithium foil and one layer of the metal foil, or a "sandwich" structure in which two layers of the lithium foils are respectively arranged on the surfaces of both sides of one layer of the metal foil), herein the metal foil may be a metal foil commonly used as a current collector, including a copper foil, a nickel foil or a platinum foil or so on; or, the lithium source composite piece is made of a lithium-containing material with an electrochemical property similar to that of metal lithium.

According to the specific implementation scheme of the present disclosure, preferably, the shape of the lithium source composite piece may be set as required, preferably a sheet shape, a strip shape or a ribbon shape, and it may be provided with an electrode lug.

According to the specific implementation scheme of the present disclosure, preferably, the surface (such as the surface facing a positive electrode piece or a negative electrode piece), close to the core body, of the lithium source composite piece is provided with a blocking component that may block lithium ions from passing through. The local precipitation of lithium may be prevented by setting the blocking component. The blocking component may preferably be a metal foil or an insulating tape. While the lithium source composite piece with the composite structure of one layer of the lithium foil and one layer of the metal foil is used, the surface of the metal foil without the lithium foil may face the positive electrode piece or the negative electrode piece, as to achieve the blocking.

The lithium content of the lithium source piece should be moderate, it may neither cause the lithium precipitation due to interference, nor not meet the pre-lithiation requirements due to insufficient lithium content. At the same time, the lithium compensation demand in the cycle process should also be considered. Or in other words, the thickness of the lithium source piece should be moderate, it may be put into a placement space, it is also considered that the lithium source piece may not fall off in the pre-lithiation process, and at the same time, the lithium may be completely consumed after the pre-lithiation is completed. Under this principle, any thicknesses are within the scope of protection of this patent. Specifically, according to an implementation scheme of the present disclosure, preferably the thickness of the lithium source composite piece does not exceed the thickness of the core body. The thickness of the lithium source composite piece may be 5-500 $\mu$m, preferably 20-300 $\mu$m, more preferably 30-280 $\mu$m, and further preferably 50-250 $\mu$m. For example: the specific numerical values of 50 $\mu$m, 80 $\mu$m, 150 $\mu$m, 200 $\mu$m, 220 $\mu$m and other scopes may be used.

According to the specific implementation scheme of the present disclosure, preferably, the surface, close to a lithium ion battery housing, of the lithium source composite piece is provided with an insulating porous elastic material. By setting the insulating porous elastic material, on the one hand, it may avoid the dissolution and falling off of the metal lithium, and may elastically constrain the core body (a laminated core or a coiled core), as to improve the internal structural stability of the lithium ion battery, and on the other hand, it may be guaranteed that there is enough electrolyte in the pre-lithiation process. The lithium source composite piece may be wrapped with an elastic liquid absorbing material, and more preferably, the elastic liquid absorbing material is a diaphragm material. By the elastic material to wrap, in the pre-lithiation process, with the consumption of the lithium source composite piece, the elastic material is deformed, the space left after the consumption may be filled, and the structural stability is improved.

According to the specific scheme of the present disclosure, preferably, the lithium source composite piece is directly connected with the negative electrode lug (for example, welded together), or the lithium source composite piece is connected with the positive electrode or the negative electrode by a third electrode using an external circuit. Namely, in the technical scheme of the present disclosure, the lithium source composite piece and the negative electrode may be connected in two modes:

First mode: the lithium source composite piece is directly connected with the negative electrode lug, for example, it is achieved by metal wire or metal sheet connection or direct welding or other modes. In this way, after the electrolyte is injected, the negative electrode starts the pre-lithiation immediately without an additional load; and this method is suitable for a case that the pre-lithiation amount is smaller, such as a case that the pre-lithiation amount is less than 10% SOC, and for example, the pre-lithiation amount is 5% SOC.

Second mode: the lithium source composite piece is connected with a third electrode, and the third electrode is connected with the negative electrode lug of the lithium ion battery by the external circuit, as to pre-lithiate the negative electrode; after the lithium ion battery is formed, the third electrode is connected with the positive electrode lug of the lithium ion battery by the external circuit, as to pre-lithiate the positive electrode. In this way, the process of pre-lithiation may be controlled by the external circuit, the speed of the pre-lithiation may be improved, and it is suitable for a case of the larger pre-lithiation amount. In addition, during the use process of the lithium ion battery, in case of need, the supplementary pre-lithiation may be performed by the third electrode. This mode is suitable for the case of the larger pre-lithiation amount, such as a case that the pre-lithiation amount is more than 10% SOC.

According to the specific implementation scheme of the present disclosure, preferably, the above pre-lithiation method of the lithium ion battery includes:

before injecting an electrolyte, arranging more than one lithium source composite piece and a third electrode in the lithium ion battery, and connecting the lithium source composite piece with the third electrode;

injecting the electrolyte, so that the lithium source composite piece is immersed in the electrolyte; and

by the third electrode, using an external circuit to connect the lithium source composite piece with a negative electrode lug, and pre-lithiating a negative electrode.

According to the specific implementation scheme of the present disclosure, preferably, after the battery cell is normally formed, by the third electrode, the external circuit is used to connect the lithium source composite piece with the positive electrode lug, as to pre-lithiate the positive electrode. Namely the pre-lithiation method of the lithium ion battery of the present disclosure may further include:

before injecting an electrolyte, arranging more than one lithium source composite piece and a third electrode in the lithium ion battery, and connecting the lithium source composite piece with the third electrode;

injecting the electrolyte, so that the lithium source composite piece is immersed in the electrolyte; and

after the battery cell is normally formed, by the third electrode, using an external circuit to connect the lithium source composite piece with a positive electrode lug, and pre-lithiating a positive electrode.

According to the specific implementation scheme of the present disclosure, preferably, while the lithium source composite piece is directly connected with the negative electrode lug, the connection between the lithium source composite piece and the negative electrode lug is located inside the housing of the lithium ion battery. The connection between the lithium source composite piece and the electrode lug may be achieved by metal wire or metal sheet connection or welding or other modes, for example: the lithium source composite piece is connected with the negative electrode lug by an ultrasonic welding mode; and in the process of battery cell lamination, the lithium source composite piece may be added and the metal foil (such as a copper foil) of the lithium source composite piece and the copper foil of the negative electrode may be welded on the same lug (Tab sheet) at the same time, this is easy for industrial formation production. While the lithium source composite piece is directly connected with the negative electrode lug, the positions of the metal wire, the metal sheet or the welding or so on used to achieve the connection are all located inside the housing. In this case, the connection located inside the housing may improve the safety, avoid problems such as liquid leakage caused by the electrode lug extending out of the housing, and greatly simplify the production process. The connection between the lithium source composite piece and the negative electrode is set inside the housing, it is unnecessary to arrange an electrode lug for the lithium source composite piece and extend it to the outside of the housing (certainly, in order to facilitate the connection, the electrode lug may also be arranged for the lithium source composite piece, but the electrode lug is located inside the housing, and may not be extended to the outside of the housing). After the pre-lithiation, lithium in the lithium source composite piece may be completely consumed, this mode may not change the structure of the existing lithium ion battery, it may be applied to more types of the lithium ion batteries, and this lithium ion battery pre-lithiation method of the present disclosure has the good production convenience, smaller adjustment to an existing production line, and lower comprehensive cost. While the lithium source composite piece is connected with the negative electrode lug or the positive electrode lug by the third electrode and using the external circuit, the third electrode and so on may also be located inside the housing, or extended out of the housing of the lithium ion battery by a certain position.

According to the specific implementation scheme of the present disclosure, preferably, the lithium ion battery is provided with a liquid injection port, the third electrode is communicated with the positive electrode lug or the negative electrode lug by the liquid injection port using the external circuit, and the battery generates a pre-lithiation reaction while a charging-discharging device of the external circuit is in a discharge state. While the negative electrode and the positive electrode need to be pre-lithiated, the lithium source composite piece, the negative electrode lug and the positive electrode lug may be connected to the charging-discharging device under the discharge state by the liquid injection port, so that the electrolyte is flowed inside the battery cell, thereby an pre-lithiation operation of the negative electrode or the positive electrode is achieved. Herein there is no special requirement for the arrangement position of the liquid injection port, it may be understood as a conventional arrangement form in an existing technology.

According to the specific implementation scheme of the present disclosure, the third electrode is mainly used while the demand of the pre-lithiation amount is larger. Preferably, the third electrode may be arranged on the battery cell housing, or the mode of the temporary pre-lithiation electrode lug by the liquid injection port may be adopted.

According to the specific implementation scheme of the present disclosure, preferably, while the pre-lithiation amount of the battery is lower than 5% SOC, a measure is not taken to keep the electrolyte inside the battery dynamic; and while the pre-lithiation amount of the battery is greater than 10% SOC, the measure is taken to keep the electrolyte inside the battery dynamic. Namely, in the pre-lithiation process of the negative electrode and the positive electrode, a certain measure is taken so that the electrolyte is flowed inside the battery cell of the lithium ion battery. In this way, lithium ions dissolved locally may be embedded into the negative electrode or positive electrode piece by the flowed electrolyte (namely, the lithium ions on the surface of the lithium source composite piece are driven to be flowed and embedded into the negative electrode or positive electrode piece), this may not only increase the pre-lithiation speed and the pre-lithiation amount, but also improve the uniformity of lithium insertion. This is one of the key points of the present disclosure. The above "measure to keep the electrolyte dynamic" includes but is not limited to vibration, rotation, inert gas agitation, electromagnetic agitation and so on, for example, the flowing of the electrolyte inside the battery cell of the lithium ion battery is achieved by rotating the lithium ion battery, vibrating the lithium ion battery, feeding an inert gas into the battery cell of the lithium ion battery, or using electromagnetism to agitate the electrolyte or other modes. Any modes that may achieve the flowing the electrolyte may be used, and are not limited to the modes listed above.

According to the specific implementation scheme of the present disclosure, in addition to the lithium source composite piece, the lithium ion battery may further include some other conventional components, such as the core body and the housing, herein the core body is composed of a positive electrode piece, a negative electrode piece, and a diaphragm, and at least one lithium source composite piece is respectively arranged on the core body surface of the lithium ion battery and/or in other spaces for placement. The positive electrode piece and the negative electrode piece are respectively provided with the positive electrode lug and the negative electrode lug, and the material, size and setting mode of the diaphragm may refer to a conventional mode in the field of the lithium ion batteries.

According to the specific implementation scheme of the present disclosure, the lithium ion battery may contain the core body assembly consisting of a plurality of the core bodies connected mutually in series or in parallel, and at least one lithium source composite piece is respectively arranged on the surface of each core body and/or in other spaces for placement in the core body assembly.

According to the specific implementation scheme of the present disclosure, the lithium ion battery targeted by the pre-lithiation method of the present disclosure may be a conventional laminated core battery, a coiled core battery, a Jellyroll To Module (JTM) battery and so on.

According to the specific implementation scheme of the present disclosure, preferably, at least one lithium source composite piece is respectively arranged on the core body surface of the lithium ion battery and/or in other spaces for placement; or, the lithium ion battery contains the core body assembly consisting of a plurality of the core bodies connected mutually in series or in parallel, and at least one lithium source composite piece is respectively arranged on the surface of each laminated core and/or in other spaces for placement in the core body assembly.

According to the specific implementation scheme of the present disclosure, preferably, the core body of the lithium ion battery is a laminated core, and at least one lithium source composite piece is arranged on the surface of at least one side of the laminated core, or at least one lithium source composite piece is respectively arranged on the surfaces of both sides of the laminated core, or the lithium source composite piece is placed on the side surface and in other spaces for placement.

According to the specific implementation scheme of the present disclosure, preferably, the core body of the lithium ion battery is a coiled core, and at least one lithium source composite piece is arranged on the side surface or top surface of the coiled core; and preferably, the lithium source composite piece is coated on the side surface of the coiled core. In the pre-lithiation process, the lithium source composite piece coated on the side surface of the coiled core may be uniformly diffused, and uniformly supplement the lithium for the negative electrode.

According to the specific implementation scheme of the present disclosure, preferably, the lithium ion battery contains a core body assembly (such as the JTM battery) consisting of a plurality of the core bodies connected mutually in series or in parallel, and at least one lithium source composite piece is arranged on the surface of at least one side of each laminated core in the core body assembly. In the above lithium ion battery, the core body may be the laminated core or the coiled core composed of the positive electrode piece and the negative electrode piece.

According to the specific implementation scheme of the present disclosure, preferably, the negative electrode of the core body of the lithium ion battery is one or a combination of more than two of a silicon negative electrode, a graphite negative electrode, a lithium titanate negative electrode, a tin negative electrode and other negative electrodes; and more preferably, the negative electrode is a silicon-containing negative electrode, and the lithium source composite piece is located in an expansion space reserved for the negative electrode in the housing of the lithium ion battery. For the battery with the silicon-containing negative electrode, the expansion of the core body of the silicon-containing negative electrode is considered, and a certain expansion space should be reserved between the large surface of the housing and the core body. While the lithium ion battery is pre-lithiated, the present disclosure may place the lithium source composite piece (for example, 1 or 2 lithium source composite pieces) with the help of this space. In this way, the lithium source composite piece may be arranged in the battery housing without affecting the battery structure. After the pre-lithiation is completed, the lithium source composite piece is completely consumed, and the reserved expansion space is vacated again, so the normal use of the lithium ion battery may not be affected.

According to the specific implementation scheme of the present disclosure, the electrolyte used in the present disclosure may also be an electrolyte commonly used in the field of lithium ion batteries, herein the amount of the electrolyte injected shall ensure that the lithium source composite piece may be immersed therein.

According to the specific implementation scheme of the present disclosure, preferably, while the negative electrode or the positive electrode is pre-lithiated by the third electrode, current and current mode need to be controlled. In this way, on the one hand, the pre-lithiation speed may be accelerated, and at the same time, the uniformity of pre-lithiation may also be controlled and the local lithium precipitation is avoided.

According to the specific implementation scheme of the present disclosure, preferably, in the formation process of the battery cell, a certain amount of the lithium is embedded from the positive electrode to the negative electrode, and preferably, the amount of lithium insertion is 10%~80% SOC, and then the pre-lithiation of the positive electrode is performed.

According to the specific implementation scheme of the present disclosure, preferably, in the pre-lithiation process of the positive electrode achieved by the third electrode, it is performed by a mode of constant voltage discharge, the voltage is preferably 2.5 V~3.5 V, more preferably 3.0 V~3.4 V, such as 2.5 V, 2.6 V, 2.7 V, 2.8 V, 2.9 V, 3.0 V, 3.1 V, 3.2 V, 3.3 V, 3.4 V, 3.5 V, or scopes in which two of these specific voltage values are used as upper and lower limits respectively.

According to the specific implementation scheme of the present disclosure, preferably, the current of the pre-lithiation of the positive electrode is 0.00001 C~1 C; and more preferably it is 0.0001 C~0.5 C.

According to the specific implementation scheme of the present disclosure, preferably, the pre-lithiation of the positive electrode is performed by an intermittent mode. The intermittent time of the current may be controlled as 1~3600 seconds, preferably 300~1800 seconds, and more preferably 60~600 seconds, for example: 60 seconds, 100 seconds, 200 seconds, 300 seconds, 400 seconds, 500 seconds, 600 seconds, or scopes in which two of these specific time values are used as upper and lower limits respectively.

According to the specific implementation scheme of the present disclosure, preferably, in the pre-lithiation process of the negative electrode achieved by the third electrode, it is performed by the mode of constant voltage discharge, the voltage is preferably 0.1 V~0.3 V, and more preferably 0.2 V.

According to the specific implementation scheme of the present disclosure, preferably, the current of the pre-lithiation of the negative electrode is 0.00001 C~1 C; and more preferably it is 0.0001 C~0.5 C, further preferably 0.01 C~0.2 C.

According to the specific implementation scheme of the present disclosure, preferably, the pre-lithiation of the negative electrode is performed by the intermittent mode. The intermittent time of the current may be controlled as 1~3600 seconds, preferably 300~1800 seconds, and more preferably 60~600 seconds, for example: 60 seconds, 100 seconds, 200 seconds, 300 seconds, 400 seconds, 500 seconds, 600 seconds, or scopes in which two of these specific time values are used as upper and lower limits respectively.

According to the specific implementation scheme of the present disclosure, preferably, the time of the pre-lithiation is 8 h~200 h, for example, 10 h, 20 h, 30 h, 40 h, 50 h, 60 h, 70 h, 80 h, 90 h, 100 h, 110 h, 120 h, 130 h, 140 h, 150 h, 160 h, 170 h, 180 h, 190 h, 200 h, or scopes in which two of these specific time values are used as upper and lower limits respectively.

According to the specific implementation scheme of the present disclosure, the lithium content of the lithium source composite piece is calculated according to the pre-lithiation amount required, and the utilization rate is properly considered. The thickness of the lithium source composite piece is controlled as required, and the requirements are satisfied that it may not only be put into the corresponding space, but also guarantee that it may not fall off during the pre-lithiation process. At the same time, the lithium in the lithium source composite piece should be completely consumed after the pre-lithiation is completed.

According to the specific implementation scheme of the present disclosure, preferably, a formula for calculating the theoretical pre-lithiation amount Y required per Ah is as follows:

$$Y = 1000nF/3.6A$$

Herein, n is the number of Li measurements, F is the Faraday constant, A is the atomic weight of lithium, and the number of Ah required is equal to the lost first efficiency multiplied by the design capacity of the battery cell.

The present disclosure further provides a lithium ion battery with high energy density and long life, and it is prepared by the above pre-lithiation method.

The pre-lithiation method provided by the present disclosure directly connects the lithium source composite piece with the negative electrode lug, and the pre-lithiation reaction takes place after the electrolyte is injected, and then the pre-lithiation of the positive electrode may be achieved by discharging (for example, the positive electrode and the negative electrode are connected by the external circuit, and it is discharged at the constant voltage, so that the lithium ions enter the positive electrode), finally the pre-lithiation of the battery is achieved. By the pre-lithiation method provided by the present disclosure, a load may not be additionally required while the pre-lithiation of the negative electrode is performed, and the pre-lithiation may be completed in the processes of core body soaking, formation and capacity grading. At the same time, the lithium source composite piece is directly connected with the negative electrode and the connection is controlled within the housing of the lithium ion battery, which may also avoid a safety problem easily caused by separately arranging the pre-lithiation electrode lug and extending it out of the battery housing.

Existing electrochemical pre-lithiation methods all use a mode of pre-lithiation on an electrode piece, and then the battery is assembled after the pre-lithiation is completed, thus problems such as difficult battery cell assembly, high environmental requirements and high production cost are caused. The method provided by the present disclosure is performed after the battery assembly is completed, the effect of the pre-lithiation on the battery assembly is avoided, problems of long electrochemical pre-lithiation time, low pre-lithiation amount, uneven pre-lithiation, metal lithium particle dissolution and so on may be solved, and the requirements for the environment are lower, so that the pre-lithiation is simple, easy to be industrialized, and low in cost.

By the pre-lithiation method provided by the present disclosure, the lithium in the lithium source composite piece may be completely consumed during the pre-lithiation process, and may not remain in the battery, thus a potential safety hazard caused by the long-term existence of the lithium source composite piece in the lithium ion battery in the existing technology is avoided.

By the pre-lithiation method provided by the present disclosure, the purpose of the pre-lithiation may be achieved by a simple method. This method basically does not change an original process of the lithium ion battery, but only changes a device locally, for example, the lithium source composite piece such as pre-lithiation electrolysis is arranged on the surface of the core body, and a tooling for flowing the electrolyte during the pre-lithiation is additionally arranged. These changes are all very easy to achieve, and easy for industrialized production.

The beneficial effects brought by the present disclosure include: under the conditions that the existing lithium ion battery process and device are not changed much, the pre-lithiation method provided by the present disclosure may achieve the industrial application of the pre-lithiation technology, and the cost is low. The capacity of the lithium ion battery manufactured by the pre-lithiation method of the present disclosure may be increased by more than 5%, the energy density is high (for example, a ternary battery may achieve more than 370 Wh/kg, and a lithium iron phosphate battery may achieve more than 230 Wh/kg), the cycle life is long (for example, the lithium iron phosphate battery may achieve more than 15000 cycles), and the cost is low (the electric quantity is increased while the cost is reduced). It is a very promising revolutionary lithium ion battery process method.

## Brief Description of the Drawings

Fig. 1 is a structure schematic diagram of a lithium source composite piece.

Fig. 2 is a structure schematic diagram of a square battery provided in Embodiment 1.

Fig. 3 is a structure schematic diagram of a soft-packing battery provided in Embodiment 2.

Fig. 4 is a structure schematic diagram of a soft-packing battery provided in Embodiment 3.

Fig. 5 is a cycle life result diagram of the square battery of Embodiment 1 and the square battery of Contrast example 1.

## Detailed Description of the Embodiments

In order to more clearly understand technical features, purposes and beneficial effects of the present disclosure, technical schemes of the present disclosure are described in detail below, but it may not be understood as limiting the implementable scope of the preset disclosure.

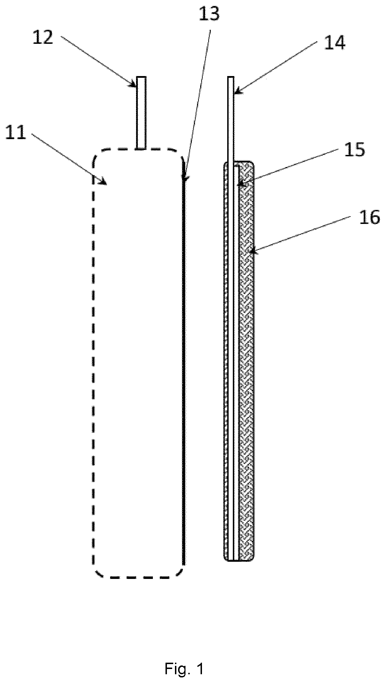

A structure of a lithium source composite piece used in the present disclosure may be as shown in Fig. 1, it is formed by a lithium foil 15 compounded on one side or both side surfaces of a metal foil 14, and an external portion of the lithium foil 15 is wrapped with an elastic liquid absorbing material layer 16.

The lithium source composite piece may be compounded to the side surface of a laminated core 11 (or any other spaces with an electrolyte, for example, while the coiled core is used, the lithium source composite piece may be compounded to a top portion of the coiled core or coated on the side surface of the coiled core), and the two are insulated by an insulating tape 13, and the lithium source composite piece is connected with a negative electrode lug 12 by the metal foil 14.

The preparation process of the lithium source composite piece and the compound process with the core body may be performed in the following modes:

the lithium foil 15 is compounded onto the metal foil 14 by a rolling method, the thickness of the metal foil 14 may be controlled between 4-100 $\mu M$, the thickness of the lithium foil 15 may be controlled between 0.01-10 mm, and lithium foil 15 may be on one side or on both sides;

the lithium foil 15 is wrapped with an elastic liquid absorbing material to form the elastic liquid absorbing material layer 16;

a layer of the insulating tape 13 resistant to electrolyte corrosion is adhered on the joint surface of the laminated core 11 and the lithium source composite piece;

then it is connected with the metal foil 14 by the electrode lug 12 of the laminated core 11, and an upper end of the metal foil 14 may be provided with a corresponding electrode lug.

Embodiment 1

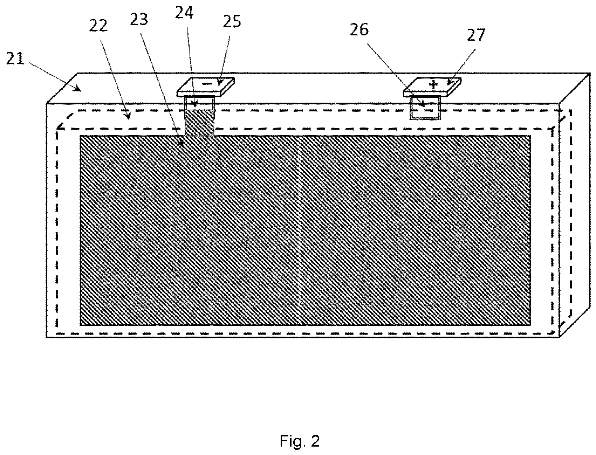

This embodiment provides a pre-lithiation method of a square battery, and a structure of the square battery is shown in Fig. 2. The square battery includes:

a core body 22, herein the core body 22 is made of a positive electrode piece, a negative electrode piece and a diaphragm by a winding or laminating process, and herein the positive electrode piece is made of a lithium iron phosphate material, the negative electrode piece is made of a graphite material, and both of which are respectively provided with a positive electrode lug 26 and a negative electrode lug 24; and

a housing 21, herein the housing 21 is used to accommodate the core body 22, and an upper portion of the housing 21 is provided with a positive electrode connecting portion 27 and a negative electrode connecting portion 25.

The pre-lithiation method includes the following steps:

one side of the core body 22 is provided with a lithium source composite piece 23, the lithium source composite piece 23 is a lithium copper composite strip with the structure shown in Fig. 1, namely a composite body with a layer of a copper foil and a layer of a lithium foil, the thickness of the lithium foil is 0.1 mm, the thickness of the copper foil is 4.5 μm, and the lithium source composite piece 23 is connected with a negative electrode lug 24; before an electrolyte is injected, the lithium copper composite strip is located in a position in which it may be immersed in the electrolyte;

a laminated core provided with the lithium source composite piece is placed into the housing 21, after the assembly is completed, the electrolyte is injected into the square battery, so that the lithium source composite piece is immersed by it, namely the pre-lithiation is started; and

the pre-lithiation time is controlled according to the requirements of the pre-lithiation amount, the pre-lithiation amount in this embodiment is 5% SOC, and the pre-lithiation time is controlled at 48 hours; the pre-lithiation time is within the acceptable range of the lithium ion battery manufacturing process.

After the pre-lithiation is completed, the conventional formation, shelving and capacity grading processes are performed, and it is specifically as follows:

1. Formation: charging with 0.02 C of a current for 4 h, shelving for 10 min, and then charging with 0.1 C of a current for 2 h;

2. Aging: after the formation is completed, standing and aging for 12 h; and

3. Capacity grading: charging with 0.33 C of a constant current, herein the cut-off voltage is 3.65 V, and then charging with 3.65 V of a constant voltage, herein the cut-off current is 0.05 C; and after completion, shelving for 10 min, and then discharging with 0.33 C of a current, herein the cut-off voltage is 2.0 V, and completing the capacity grading.

Contrast example 1

This contrast example provides a conventional manufacturing method for a square battery, it differs from Embodiment 1 in that a lithium source piece is not placed and pre-lithiation is not performed, and the others are the same.
The relevant performances of the square batteries prepared by Embodiment 1 and Contrast example 1 are detected, and results are shown in Table 1.

Table 1

| | Structure | System | First efficiency (%) | Capacity (Ah) | Cycle/capacity retention ratio |
|---|---|---|---|---|---|
| Contrast example 1 | Square | LFP+C | 91.8 | 105 | 5527cls@80% |
| Embodiment 1 | | | 96.5 | 110 | 7869cls@93.57% |

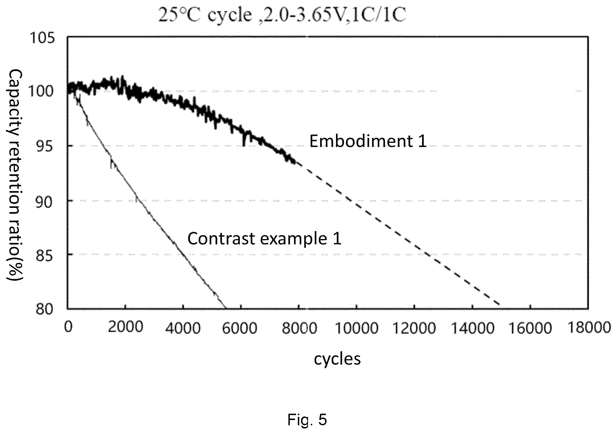

It may be seen from the content in Table 1 that: the lithium ion battery cell obtained by the pre-lithiation method of Embodiment 1 may have the capacity about 5% higher than that of Contrast example 1, and may reach the cycle life of about 2000 cycles without attenuation and tending to 15000 cycles, while the cycle life of a sample of Contrast example 1 is less than 6000 cycles (as shown in Fig. 5).

Embodiment 2

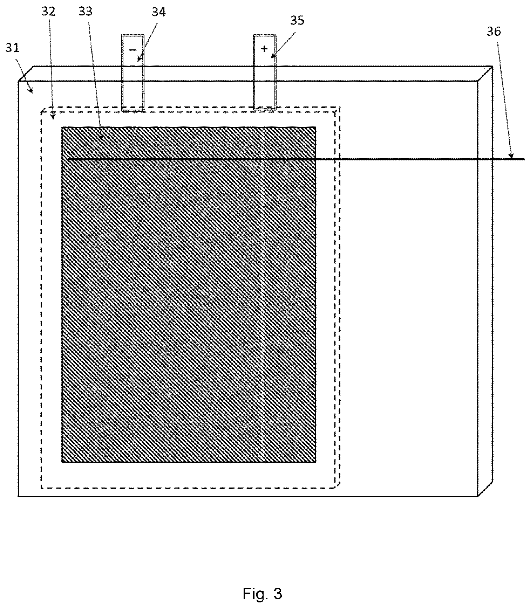

This embodiment provides a pre-lithiation method of a soft-packing battery, herein, the structure of the soft-packing battery is shown in Fig. 3, and its length is 360 mm. The soft-packing battery includes:

a core body 32, herein the core body 32 is made of a positive electrode piece, a negative electrode piece and a diaphragm by a lamination process, and herein the positive electrode piece is a ternary material Nickel-Cobalt-Manganese (NCM), the negative electrode piece is a silicon 600 negative electrode, and both of which are respectively provided with a positive electrode lug 35 and a negative electrode lug 34, and are arranged on the same side of the core body 32; and

a housing 31, herein the housing 31 is an aluminum plastic film, and is used to accommodate the core body 32.

The pre-lithiation method includes the following steps:

one side of the core body 32 is provided with a lithium source composite piece 33, and the position of the lithium source composite piece 33 should guarantee that it may be immersed in an electrolyte; the lithium source composite piece 33 is a lithium copper composite strip with a structure shown in Fig. 1, namely a composite body with a layer of a copper foil and a layer of a lithium foil, the thickness of the lithium foil is 0.1-0.2 mm, the thickness of the copper foil is 4.5 μm, and the lithium copper composite strip may be made into various shapes such as a rectangle, a ribbon shape, and a U shape;

the lithium source composite piece 33 is provided with a third electrode 36, and is led out by a liquid injection port; a negative electrode, a positive electrode and the lithium source composite piece 33 are connected to pre-lithiate the negative electrode and the positive electrode, as shown in Fig. 3;

the core body provided with the lithium source composite piece is put into the housing, and after the assembly is completed, the electrolyte is injected into the soft-packing battery, so that the lithium source composite piece is immersed by it; and

an external circuit is used to connect the lithium source composite piece 33 with the negative electrode lug 34 by the third electrode 36, as to pre-lithiate the negative electrode.

After the negative electrode pre-lithiation is completed, a conventional formation process is performed, and it is specifically as follows:

it is charged with 0.02 C of a current for 2 h, shelved for 10 min, then charged with 0.05 C of a current for 2 h, shelved for 10 min, and then charged with 0.1 C of a current for 1 h;

then the third electrode 36 is connected with the positive electrode lug 35, to pre-lithiate the positive electrode, the current of pre-lithiation is controlled at 0.01 C, it may be performed in modes of constant voltage and intermittent discharge, the voltage is 3.0 V, and the intermittent time is 60 seconds; and

in the pre-lithiation process, the soft-packing battery is rotated and vibrated so that the electrolyte inside the core body 32 is flowed, as to accelerate the pre-lithiation speed and make the pre-lithiation proceed evenly, herein the rotation may be performed alternately by 180° forward rotation and 180° reverse rotation, the rotation speed is 5 revolutions per minute (rpm), the vibration motor speed is 1000 rpm; and the specific rotation is performed in an intermittent mode by rotating 180° for 60 seconds and then rotating 180°.

The pre-lithiation time is controlled according to the requirements of the pre-lithiation amount, the pre-lithiation amount in this embodiment is 12% SOC, and the pre-lithiation time is 96 hours.
After the pre-lithiation is completed, conventional aging and capacity grading processes are performed on the battery cell, and it is specifically as follows:

1. Aging: after the formation is completed, standing and aging for 24 hours; and

2. Capacity grading: charging with 0.33 C of a constant current, herein the cut-off voltage is 4.25 V, and then charging with 4.25 V of a constant voltage, herein the cut-off current is 0.05 C; and after completion, shelving for 10 min, and then discharging with 0.33 C of a current, herein the cut-off voltage is 2.0 V, and completing the capacity grading.

Contrast example 2

This contrast example provides a conventional manufacturing method for a soft-packing battery, it differs from Embodiment 2 in that a lithium source piece is not placed and pre-lithiation is not performed, and the others are the same.
The relevant performances of the square batteries prepared by Embodiment 2 and Contrast example 2 are detected, and results are shown in Table 2.

Table 2

|  | Structure | System | First efficiency (%) | Capacity (Ah) | Specific energy (Wh/kg) |
|---|---|---|---|---|---|
| Contrast example 2 | Soft-packing | NCM+Si600 | 76.1 | 97 | 320 |
| Embodiment 2 | | | 88.1 | 110 | 370 |

It may be seen from the content in Table 2 that: the lithium ion battery manufactured by the method of Embodiment 2 has the higher first efficiency of charge and discharge and the higher capacity utilization. The specific energy of the battery cell may reach 370 Wh/kg, while the specific energy of a sample in contrast example 2 is only 320 Wh/kg.

Embodiment 3

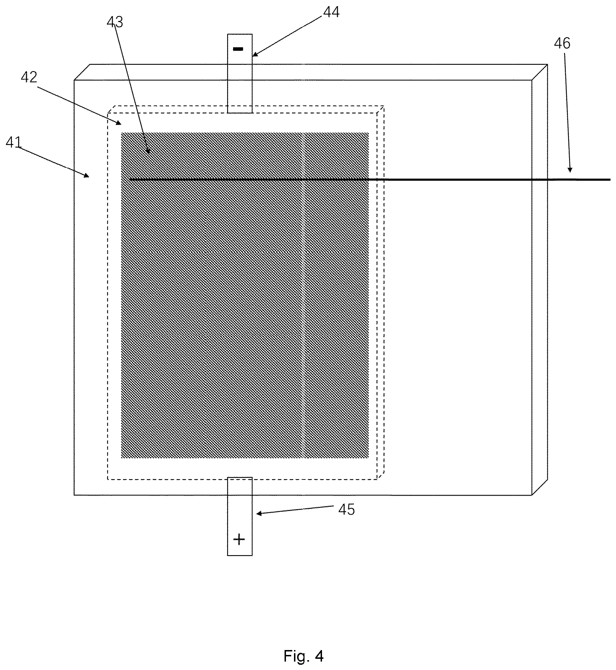

This embodiment provides a pre-lithiation method of a soft-packing battery, herein, a structure of the soft-packing battery is shown in Fig. 4, its length is 357 mm, its structure is similar to that of the soft-packing battery in Embodiment 2, and a difference is that the soft-packing battery in this embodiment is a soft-packing battery with electrode lugs at both ends. The soft-packing battery includes:

a core body 42, herein the core body 42 is made of a positive electrode piece, a negative electrode piece and a diaphragm by a lamination process, and herein, the positive electrode is made of a lithium iron phosphate material, the negative electrode is made of a silicon 600 negative electrode material, and both of which are respectively provided with a positive electrode lug 45 and a negative electrode lug 44, and are respectively arranged at upper and lower two ends of the core body 42; and

a housing 41, herein the housing 41 is an aluminum plastic film, and is used to accommodate the core body 42.

The lithium source composite piece, pre-lithiation process, aging and capacity grading processes are the same as those in Embodiment 2.

Contrast example 3

This contrast example provides a conventional manufacturing method for a soft-packing battery, it differs from Embodiment 3 in that a lithium source piece is not placed and pre-lithiation is not performed, and the others are the same.
The relevant performances of the square batteries prepared by Embodiment 3 and Contrast example 3 are detected, and results are shown in Table 3.

Table 3

| | Structure | Chemical system | First efficiency (%) | Capacity (Ah) | Specific energy (Wh/kg) |
|---|---|---|---|---|---|
| Contrast example 3 | Soft-packing | LFP+ Si600 | 76.2 | 64.1 | 199.6 |
| Embodiment 3 | | | 95.1 | 79 | 230.3 |

It may be seen from the content in Table 3 that: the lithium ion battery manufactured by the method of Embodiment 3 has the higher first efficiency of charge and discharge (the first efficiency is increased by 19%, and this is a major breakthrough), and the higher capacity utilization. The specific energy of the battery cell may reach 230.3 W/kg, while the specific energy of a sample in Contrast example 3 is only 199.6 W/kg.

**Claims**

1. A pre-lithiation method of a lithium ion battery, comprising:

in a conventional lithium ion battery manufacturing process, before injecting an electrolyte, arranging more than one lithium source composite piece in a core body,
the method further comprises:

connecting at least one lithium source composite piece with a negative electrode lug of the lithium ion battery; and
injecting the electrolyte, so that the lithium source composite piece is immersed by the electrolyte, and pre-lithiating a negative electrode;
**characterised by**:

wherein the lithium source composite piece is directly connected with the negative electrode lug to pre-lithiate the negative electrode; or

the lithium source composite piece is connected with a third electrode, the third electrode uses an external circuit to connect the negative electrode lug of the lithium ion battery so as to pre-lithiate the negative electrode; and after the lithium ion battery is formed, the third electrode uses the external circuit to connect the positive electrode lug of the lithium ion battery so as to pre-lithiate the positive electrode.

2. The method according to claim 1, wherein the lithium source composite piece is a metal composite lithium piece formed by compounding a lithium foil (15) and a metal foil (14).

3. The method according to claim 2, wherein the metal foil (14) is a copper foil, a nickel foil or a platinum foil.

4. The method according to claim 2, wherein the surface, close to the core body, of the lithium source composite piece is provided with a blocking component that can block lithium ions from passing through, and the surface, close to a lithium ion battery housing, of the lithium source composite piece is provided with an insulating porous elastic material; the blocking component is a metal foil (14) or an insulating tape (13).

5. The method according to claim 4, wherein the thickness of the lithium source composite piece does not exceed the thickness of the core body;
preferably, the thickness of the lithium source composite piece is 5-500 $\mu$m.

6. The method according to any one of claims 1 to 5, wherein while the lithium source composite piece is directly connected with the negative electrode lug, the connection between the lithium source composite piece and the negative electrode lug is located inside the housing of the lithium ion battery;
preferably, the lithium ion battery is provided with a liquid injection port, the third electrode is communicated with the positive electrode lug or the negative electrode lug by the liquid injection port using the external circuit, and the battery generates a pre-lithiation reaction while a charging-discharging device of the external circuit is in a discharge state.

7. The method according to claim 6, wherein while the pre-lithiation amount of the battery is lower than 5% SOC, a measure is not taken to keep the electrolyte inside the battery dynamic; and while the pre-lithiation amount of the battery is greater than 10% SOC, the measure is taken to keep the electrolyte inside the battery dynamic;

preferably, the measure to keep the electrolyte dynamic comprises: rotating the lithium ion battery, vibrating the lithium ion battery, feeding an inert gas into the battery cell of the lithium ion battery, or using electromagnetism to agitate the electrolyte;
preferably, the pre-lithiation time is 8 h~200 h;
preferably, the current of positive electrode pre-lithiation is 0.00001 C~1 C; and preferably it is 0.0001 C~0.5 C.

8. The method according to any one of claims 1 to 5 , wherein the core body is composed of a positive electrode piece, a negative electrode piece and a diaphragm, and at least one lithium source composite piece is respectively arranged on the surface of the core body of the lithium ion battery and/or in other spaces for placement;
or, the lithium ion battery contains a core body assembly consisting of a plurality of the core bodies connected mutually in series or in parallel, and at least one lithium source composite piece is respectively arranged on the surface of each core body and/or in other spaces for placement in the core body assembly.

9. The method according to any one of claims 1 to 5, wherein the core body is composed of the positive electrode piece, the negative electrode piece and the diaphragm;

the core body of the lithium ion battery is a laminated core (11), and at least one lithium source composite piece is arranged on the surface of at least one side of the laminated core (11), or at least one lithium source composite piece is respectively arranged on the surfaces of both sides of the laminated core (11), or the lithium source composite piece is placed on the side surface and in other spaces for placement;
or, the core body of the lithium ion battery is a coiled core, and at least one lithium source composite piece is arranged on the side surface or top surface of the coiled core; and preferably, the lithium source composite piece is coated on the side surface of the coiled core;
or, the lithium ion battery contains a core body assembly consisting of a plurality of the core bodies connected mutually in series or in parallel, and at least one lithium source composite piece is arranged on the surface of at least one side of each core body in the core body assembly.

10. The method according to any one of claims 1 to 5, wherein the negative electrode of the core body of the lithium ion battery is one or a combination of more than two of a silicon negative electrode, a graphite negative electrode, a lithium titanate negative electrode, and a tin negative electrode; and preferably, the negative electrode is a silicon-containing negative electrode, and the lithium source composite piece is located in an expansion space reserved for the negative electrode in the housing of the lithium ion battery.

11. The method according to claim 7, wherein in the process of positive electrode pre-lithiation, a mode of constant voltage discharge is used, and the voltage is preferably 2.5 V~3.5 V, more preferably 3.0 V~3.4 V.

12. The method according to claim 7, wherein the positive electrode pre-lithiation is performed by an intermittent mode, the time interval of intermittence is 1~3600 seconds, preferably 60~600 seconds.

13. The method according to claim 7, wherein a formula for calculating the theoretical pre-lithiation amount Y required per Ah is as follows:

$$Y=1000nF/3.6A$$

wherein, n is the number of Li measurements, F is the Faraday constant, A is the atomic weight of lithium, and the number of Ah required is equal to the lost first efficiency multiplied by the design capacity of the battery cell.

14. A lithium ion battery, wherein it is prepared by the method according to any one of claims 1-13.

**Patentansprüche**

1. Vorlithiierungsverfahren für eine Lithium-Ionen-Batterie, umfassend:

in einem herkömmlichen Herstellungsprozess für Lithium-Ionen-Batterien, vor dem Injizieren eines Elektrolyten, Anordnen von mehr als einem Lithiumquellen-Verbundstück in einem Kernkörper, wobei das Verfahren ferner Folgendes umfasst:

Verbinden mindestens eines Lithiumquellen-Verbundstücks mit einer negativen Elektrodenfahne der Lithium-Ionen-Batterie; und Injizieren des Elektrolyten, sodass das Lithiumquellen-Verbundstück vom Elektrolyten umgeben ist, und Vorlithiieren einer negativen Elektrode; **gekennzeichnet durch**:

wobei das Lithiumquellen-Verbundstück direkt mit der negativen Elektrodenfahne verbunden ist, um die negative Elektrode vorzulithiieren; oder das Lithiumquellen-Verbundstück mit einer dritten Elektrode verbunden wird, wobei die dritte Elektrode einen externen Stromkreis verwendet, um die negative Elektrodenfahne der Lithium-Ionen-Batterie zu verbinden, um so die negative Elektrode vorzulithiieren; und nachdem die Lithium-Ionen-Batterie gebildet wurde, die dritte Elektrode den externen Stromkreis verwendet, um die positive Elektrodenfahne der Lithium-Ionen-Batterie zu verbinden, um so die positive Elektrode vorzulithiieren.

2. Verfahren nach Anspruch 1, wobei das Lithiumquellen-Verbundstück ein Metall-Lithium-Verbundstück ist, das durch Zusammenfügen einer Lithiumfolie (15) und einer Metallfolie (14) gebildet wird.

3. Verfahren nach Anspruch 2, wobei die Metallfolie (14) eine Kupferfolie, eine Nickelfolie oder eine Platinfolie ist.

4. Verfahren nach Anspruch 2, wobei die Oberfläche des Lithiumquellen-Verbundstücks, die sich nahe am Kernkörper befindet, mit einer Sperrkomponente versehen ist, die Lithiumionen am Durchgang hindern kann, und die Oberfläche des Lithiumquellen-Verbundstücks, die sich nahe an einem Gehäuse der Lithium-Ionen-Batterie befindet, mit einem isolierenden porösen elastischen Material versehen ist; wobei die Sperrkomponente eine Metallfolie (14) oder ein Isolierband (13) ist.

5. Verfahren nach Anspruch 4, wobei die Dicke des Lithiumquellen-Verbundstücks die Dicke des Kernkörpers nicht überschreitet; vorzugsweise wobei die Dicke des Lithiumquellen-Verbundstücks 5 - 500 μm beträgt.

6. Verfahren nach irgendeinem der Ansprüche 1 bis 5, wobei, während das Lithiumquellen-Verbundstück direkt mit der negativen Elektrodenfahne verbunden ist, die Verbindung zwischen dem Lithiumquellen-Verbundstück und der negativen Elektrodenfahne sich innerhalb des Gehäuses der Lithium-Ionen-Batterie befindet; vorzugsweise wobei die Lithium-Ionen-Batterie mit einer Flüssigkeitsinjektionsöffnung versehen ist, die dritte Elektrode über die Flüssigkeitsinjektionsöffnung unter Verwendung des externen Stromkreises mit der positiven Elektrodenfahne oder der negativen Elektrodenfahne verbunden ist, und die Batterie eine Vorlithiierungsreaktion erzeugt, während sich eine Lade-Entlade-Vorrichtung des externen Stromkreises in einem Entladungszustand befindet.

7. Verfahren nach Anspruch 6, wobei, während die Vorlithiierungsmenge der Batterie weniger als 5 % SOC beträgt, die Maßnahme nicht ergriffen wird, den Elektrolyten innerhalb der Batterie dynamisch zu halten; und während die Vorlithiierungsmenge der Batterie mehr als 10 % SOC beträgt, die Maßnahme ergriffen wird, den Elektrolyten innerhalb der Batterie dynamisch zu halten; vorzugsweise wobei die Maßnahme, den Elektrolyten dynamisch zu halten, Folgendes umfasst: Drehen der Lithium-Ionen-Batterie, Vibrieren der Lithium-Ionen-Batterie, Zuführen eines Inertgases in die Batteriezelle der Lithium-Ionen-Batterie oder Verwenden von Elektromagnetismus, um den Elektrolyten zu rühren; vorzugsweise wobei die Vorlithiierungszeit ca. 8 h - 200 h beträgt; vorzugsweise wobei der Strom der Vorlithiierung der positiven Elektrode ca. 0,00001 C - 1 C beträgt; und vorzugsweise ca. 0,0001 C - 0,5 C beträgt.

8. Verfahren nach irgendeinem der Ansprüche 1 bis 5, wobei der Kernkörper aus einem positiven Elektrodenstück, einem negativen Elektrodenstück und einer Membran besteht und mindestens ein Lithiumquellen-Verbundstück jeweils auf der Oberfläche des Kernkörpers der Lithium-Ionen-Batterie und/oder in anderen Räumen zur Platzierung angeordnet ist; oder wobei die Lithium-Ionen-Batterie eine Kernkörperanordnung enthält, die aus einer Vielzahl von Kernkörpern besteht, die miteinander in Reihe oder parallel verbunden sind, und wobei mindestens ein Lithiumquellen-Verbundstück jeweils auf der Oberfläche jedes Kernkörpers und/oder in anderen Räumen zur Platzierung in der Kernkörperanordnung angeordnet ist.

9. Verfahren nach irgendeinem der Ansprüche 1 bis 5, wobei der Kernkörper aus dem positiven Elektrodenstück, dem negativen Elektrodenstück und der Membran besteht; wobei der Kernkörper der Lithium-Ionen-Batterie ein laminierter Kern (11) ist und mindestens ein Lithiumquellen-Verbundstück auf der Oberfläche mindestens einer Seite des laminierten Kerns (11) angeordnet ist, oder mindestens ein Lithiumquellen-Verbundstück jeweils auf den Oberflächen beider Seiten des laminierten Kerns (11) angeordnet ist, oder das Lithiumquellen-Verbundstück auf der Seitenfläche und in anderen Räumen zur Platzierung platziert ist;

oder wobei der Kernkörper der Lithium-Ionen-Batterie ein gewickelter Kern ist und mindestens ein Lithiumquellen-Verbundstück auf der Seitenfläche oder der Oberseite des gewickelten Kerns angeordnet ist; und vorzugsweise wobei das Lithiumquellen-Verbundstück auf der Seitenfläche des gewickelten Kerns beschichtet ist; oder wobei die Lithium-Ionen-Batterie eine Kernkörperanordnung enthält, die aus einer Vielzahl von Kernkörpern besteht, die miteinander in Reihe oder parallel verbunden sind, und mindestens ein Lithiumquellen-Verbundstück auf der Oberfläche mindestens einer Seite jedes Kernkörpers in der Kernkörperanordnung angeordnet ist.

10. Verfahren nach irgendeinem der Ansprüche 1 bis 5, wobei die negative Elektrode des Kernkörpers der Lithium-Ionen-Batterie eine oder eine Kombination aus mehr als zwei von einer negativen Siliziumelektrode, einer negativen Graphitelektrode, einer negativen Lithiumtitanat-Elektrode und einer negativen Zinnelektrode ist; und vorzugsweise wobei die negative Elektrode eine siliziumhaltige negative Elektrode ist und sich das Lithiumquellen-Verbundstück in einem für die negative Elektrode reservierten Ausdehnungsraum im Gehäuse der Lithium-Ionen-Batterie befindet.

11. Verfahren nach Anspruch 7, wobei beim Prozess der Vorlithiierung der positiven Elektrode ein Modus der Entladung mit konstanter Spannung verwendet wird und die Spannung vorzugsweise ca. 2,5 V - 3,5 V, besonders bevorzugt ca. 3,0 V - 3,4 V beträgt.

12. Verfahren nach Anspruch 7, wobei die Vorlithiierung der positiven Elektrode in einem intermittierenden Modus durchgeführt wird, wobei das Zeitintervall der Intermittenz ca. 1 - 3600 Sekunden, vorzugsweise ca. 60 - 600 Sekunden beträgt.

13. Verfahren nach Anspruch 7, wobei eine Formel zum Berechnen der theoretischen Vorlithiierungsmenge Y, die pro Ah erforderlich ist, wie folgt lautet:

$$Y = 1000nF/3,6A$$

wobei n die Anzahl der Li-Messungen ist, F die Faraday-Konstante ist, A das Atomgewicht von Lithium ist und die erforderliche Anzahl von Ah gleich dem verlorenen ersten Wirkungsgrad multipliziert mit der Auslegungskapazität der Batteriezelle ist.

**14.** Lithium-Ionen-Batterie, wobei sie durch das Verfahren gemäß irgendeinem der Ansprüche 1 - 13 hergestellt wird.

**Revendications**

**1.** Procédé de pré-lithiation d'une batterie lithium-ion, comprenant :
dans un processus de fabrication classique de batteries lithium-ion, avant l'injection d'un électrolyte, l'agencement de plusieurs pièces composites de source de lithium dans un corps central, le procédé comprend également :

la connexion d'au moins une pièce composite de source de lithium à une cosse d'électrode négative de la batterie lithium-ion ; et
l'injection de l'électrolyte, de sorte que la pièce composite de source de lithium est immergée par l'électrolyte, et la pré-lithiation d'une électrode négative ;
étant **caractérisé par** :

dans lequel la pièce composite de source de lithium est directement connectée à la cosse de l'électrode négative pour pré-lithier l'électrode négative ; ou
la pièce composite de source de lithium est reliée à une troisième électrode, la troisième électrode utilise un circuit externe pour se connecter à la cosse de l'électrode négative de la batterie lithium-ion afin de pré-lithier l'électrode négative ; et après que la batterie lithium-ion est formée, la troisième électrode utilise le circuit externe pour connecter la cosse de l'électrode positive de la batterie lithium-ion afin de pré-lithier l'électrode positive.

**2.** Procédé selon la revendication 1, dans lequel la pièce composite de source de lithium est une pièce composite de lithium métallique formée en combinant une feuille de lithium (15) et une feuille métallique (14).

**3.** Procédé selon la revendication 2, dans lequel la feuille métallique (14) est une feuille de cuivre, une feuille de nickel ou une feuille de platine.

**4.** Procédé selon la revendication 2, dans lequel la surface, proche du corps central, de la pièce composite de source de lithium est munie d'un composant de blocage qui peut empêcher les ions lithium de passer, et la surface, proche d'un boîtier de batterie lithium-ion, de la pièce composite de source de lithium est munie d'un matériau élastique poreux isolant ;
le composant de blocage est une feuille métallique (14) ou un ruban isolant (13).

**5.** Procédé selon la revendication 4, dans lequel l'épaisseur de la pièce composite de source de lithium ne dépasse pas l'épaisseur du corps central ;
de préférence, l'épaisseur de la pièce composite de source de lithium est de 5 à 500 $\mu$m.

**6.** Procédé selon l'une quelconque des revendications 1 à 5, dans lequel tandis que la pièce composite de source de lithium est directement connectée à la cosse de l'électrode négative, la connexion entre la pièce composite de source de lithium et la cosse de l'électrode négative est située à l'intérieur du boîtier de la batterie lithium-ion ;
de préférence, la batterie lithium-ion est munie d'un port d'injection de liquide, la troisième électrode est reliée à la cosse de l'électrode positive ou à la cosse de l'électrode négative par le port d'injection de liquide à l'aide du circuit externe, et la batterie génère une réaction de pré-lithiation pendant qu'un dispositif de charge-décharge du circuit externe est en état de décharge.

**7.** Procédé selon la revendication 6, dans lequel lorsque la quantité de pré-lithiation de la batterie est inférieure à 5 % SOC de l'état de charge, aucune mesure n'est prise pour maintenir l'électrolyte à l'intérieur de la batterie dynamique ; et lorsque la quantité de pré-lithiation de la batterie est supérieure à 10 % SOC de l'état de charge, des mesures sont prises pour maintenir l'électrolyte à l'intérieur de la batterie dynamique ;

de préférence, la mesure visant à maintenir l'électrolyte dynamique comprend : la rotation de la batterie lithium-ion, la vibration de la batterie lithium-ion, l'injection d'un gaz inerte dans la cellule de la batterie lithium-ion, ou l'utilisation de l'électromagnétisme pour agiter l'électrolyte ;

de préférence, le temps de pré-lithiation est de 8 h à 200 h ;

de préférence, le courant de pré-lithiation de l'électrode positive est de 0,00001 C à 1 C ; et de préférence, il est de 0,0001 C à 0,5 C.

8. Procédé selon l'une quelconque des revendications 1 à 5, dans lequel le corps central est composé d'une pièce d'électrode positive, d'une pièce d'électrode négative et d'un diaphragme, et au moins une pièce composite de source de lithium est respectivement agencée sur la surface du corps central de la batterie lithium-ion et/ou dans d'autres espaces pour le placement ;

ou bien, la batterie lithium-ion contient un ensemble de corps central constitué d'une pluralité de corps centraux connectés entre eux en série ou en parallèle, et au moins une pièce composite de source de lithium est respectivement agencée sur la surface de chaque corps central et/ou dans d'autres espaces pour placement dans l'ensemble de corps central.

9. Procédé selon l'une quelconque des revendications 1 à 5, dans lequel le corps central est composé de la pièce d'électrode positive, de la pièce d'électrode négative et du diaphragme ;

le corps central de la batterie lithium-ion est un noyau laminé (11), et au moins une pièce composite de source de lithium est agencée sur la surface d'au moins un côté du noyau laminé (11), ou au moins une pièce composite de source de lithium est respectivement agencée sur les surfaces des deux côtés du noyau laminé (11), ou la pièce composite de source de lithium est placée sur la surface latérale et dans d'autres espaces pour le placement ;

ou bien, le corps central de la batterie lithium-ion est un noyau enroulé, et au moins une pièce composite de source de lithium est agencée sur la surface latérale ou la surface supérieure du noyau enroulé ; et de préférence, la pièce composite de source de lithium est déposée sur la surface latérale du noyau enroulé ;

ou bien, la batterie lithium-ion contient un ensemble de corps central constitué d'une pluralité des corps centraux connectés mutuellement en série ou en parallèle, et au moins une pièce composite de source de lithium est agencée sur la surface d'au moins un côté de chaque corps central dans l'ensemble de corps central.

10. Procédé selon l'une quelconque des revendications 1 à 5, dans lequel l'électrode négative du corps central de la batterie lithium-ion est une ou une combinaison de plus de deux d'une électrode négative en silicium, d'une électrode négative en graphite, d'une électrode négative en titanate de lithium et d'une électrode négative en étain ; et de préférence, l'électrode négative est une électrode négative contenant du silicium, et la pièce composite de source de lithium est située dans un espace d'expansion réservé à l'électrode négative dans le boîtier de la batterie lithium-ion.

11. Procédé selon la revendication 7, dans lequel lors du processus de pré-lithiation de l'électrode positive, un mode de décharge à tension constante est utilisé, et la tension est de préférence de 2,5 V à 3,5 V, de manière davantage préférée de 3,0 V à 3,4 V.

12. Procédé selon la revendication 7, dans lequel la pré-lithiation de l'électrode positive est réalisée en mode intermittent, l'intervalle de temps d'intermittence est de 1 à 3600 secondes, de préférence de 60 à 600 secondes.

13. Procédé selon la revendication 7, dans lequel une formule de calcul de la quantité théorique de pré-lithiation Y requise par Ah est la suivante :

$$Y = 1000nF/3,6A$$

dans lequel, n est le nombre de mesures de Li, F est la constante de Faraday, A est le poids atomique du lithium et le nombre d'Ah requis est égal à la première efficacité perdue multipliée par la capacité nominale de la cellule de batterie.

14. Batterie =- lithium-ion, dans laquelle elle est préparée selon le procédé selon l'une quelconque des revendications 1 à 13.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1290209 C
- CN 112310336 A
- CN 112397682 A
- CN 111430659 A
- CN 105845894 B
- CN 110224182 A
- CN 110061299 A
- CN 111969266 A

**Non-patent literature cited in the description**

- Lithium Ion Battery Lithium Compensation Technology. *Energy Storage Science and Technology*, May 2021, vol. 10 (3)